(19) Europäisches Patentamt
European Patent Office
Office européen des brevets

(11) **EP 2 191 282 B1**

(12) **EUROPÄISCHE PATENTSCHRIFT**

(45) Veröffentlichungstag und Bekanntmachung des Hinweises auf die Patenterteilung:
**16.02.2011 Patentblatt 2011/07**

(51) Int Cl.:
*G01P 13/04* (2006.01)     *G01P 3/44* (2006.01)
*G01D 5/245* (2006.01)

(21) Anmeldenummer: **08804471.4**

(22) Anmeldetag: **19.09.2008**

(86) Internationale Anmeldenummer:
**PCT/EP2008/062537**

(87) Internationale Veröffentlichungsnummer:
**WO 2009/043739 (09.04.2009 Gazette 2009/15)**

(54) **VERFAHREN UND VORRICHTUNG ZUR ROBUSTEN UND EFFIZIENTEN BESTIMMUNG VON DREHRICHTUNG UND/ODER DREHGESCHWINDIGKEIT EINES RADES ODER EINER WELLE**

METHOD AND DEVICE FOR THE STABLE, EFFICIENT DETERMINATION OF THE ROTATIONAL DIRECTION AND/OR ROTATIONAL SPEED OF A WHEEL OR A SHAFT

PROCÉDÉ ET DISPOSITIF DE DÉTERMINATION ROBUSTE ET EFFICACE DU SENS DE ROTATION ET/OU DE LA VITESSE DE ROTATION D'UNE ROUE OU D'UN ARBRE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.09.2007 DE 102007046308**

(43) Veröffentlichungstag der Anmeldung:
**02.06.2010 Patentblatt 2010/22**

(73) Patentinhaber: **Robert Bosch GmbH**
**70442 Stuttgart (DE)**

(72) Erfinder: **WENZLER, Axel**
**71229 Leonberg (DE)**

(56) Entgegenhaltungen:
**EP-A- 1 172 656         DE-A1- 10 142 449**
**US-A1- 2003 145 663     US-A1- 2004 015 307**

**Beschreibung**

Technisches Gebiet

Die Erfindung betrifft ein Verfahren zur robusten und effizienten Bestimmung von Drehrichtung und/oder Drehgeschwindigkeit eines Rades oder einer Welle. Ferner betrifft die Erfindung eine Vorrichtung zum Ausführen eines Verfahrens zur robusten und effizienten Bestimmung von Drehrichtung und/oder Drehgeschwindigkeit eines Rades oder einer Welle.

Stand der Technik

Bei vielen Systemen, insbesondre im Kfz-Bereich, ist eine sehr genaue und sichere Bestimmung einer Drehrichtung und/oder Drehgeschwindigkeit, wie z.B. bei Rädern oder Wellen, notwendig. Hierzu werten die Systeme zur Bestimmung der Drehrichtung und/oder Drehgeschwindigkeit je ein sinus- und cosinus-förmiges Beschleunigungssignal in der Form

$$x = \cos\varphi$$

$$y = \sin\varphi$$

aus. Dabei ist der Winkel φ der Momentanwert des (Dreh-)Winkels des Rades bzw. der Welle. Die Sensoren sind dabei an unterschiedlichen Positionen an der Felge des Rades bzw. an der Welle montiert oder besitzen eine Sensitivität in unterschiedliche Richtungen. In der Regel weisen die beiden Signale x und y eine Phasenverschiebung zueinander von 90° auf.

Aus dem Stand der Technik sind Verfahren bekannt, welche die Signale x und y beobachten und aus der Abfolge der Minima und Maxima der beiden Signale die Drehrichtung des Rades bzw. der Welle bestimmen. Es ist zum Beispiel möglich, das Signal x zu beobachten und den Zeitpunkt zu erfassen, an dem das Signal x den ersten Nulldurchgang nach einem Maximum hat. Weist nun das Signal y zu diesem Zeitpunkt ein Maximum auf, so dreht sich das Rad bzw. die Welle in positiver Richtung von φ. Weist das Signal y zu diesem Zeitpunkt hingegen ein Minimum auf, so dreht sich das Rad bzw. die Welle in negativer Richtung von φ.

Diese Verfahren weisen jedoch gewisse Nachteile auf. Im Allgemeinen sind die erfassten Signale mit Offsets, d.h. mit einem Gleichanteil behaftet oder sonst wie gestört, wodurch sich die während des gesamten Beobachtungszeitraums nötige Erfassung der Minima, Maxima und Nulldurchgänge als problematisch darstellt. Aufgrund des langen Beobachtungszeitraums hat die verwendete Auswerteschaltung einen erhöhten Leistungsverbrauch, da sie dauerhaft bestromt werden muss. Ferner liefern die oben erwähnten Verfahren nur Informationen über die Drehrichtung, nicht jedoch noch weitere Informationen wie z.B. die Drehfrequenz etc.

Solche Verfahren sind Z.B. aus US2003/145663, EP1172656 und US 2004/015307 bekannt.

Es besteht daher der Bedarf nach einem verbesserten Verfahren zur effizienten Bestimmung von Drehrichtung und/oder Drehgeschwindigkeit eines drehbaren Körpers.

Es ist daher die Aufgabe der vorliegenden Erfindung, ein Verfahren zur effizienten Bestimmung von Drehrichtung und/oder Drehgeschwindigkeit eines drehbaren Körpers zu schaffen, welche die vorgenannten Nachteile umgeht. Gelöst wird diese Aufgabe durch den Gegenstand des Anspruchs 1.

Eine weitere Aufgabe der Erfindung ist es, eine Vorrichtung zur effizienten Bestimmung von Drehrichtung und/oder Drehgeschwindigkeit eines drehbaren Körpers zu schaffen. Diese Aufgabe wird durch den Gegenstand von Anspruch 8 gelöst.

Ferner stellt sich die Erfindung die Aufgabe, eine Computerprogramm, das alle Schritte des erfindungsgemäßen Verfahrens ausführt, wenn es auf einem Rechengerät abläuft zur Verfügung zu stellen. Diese Aufgabe wird durch den Gegenstand von Anspruch 9 gelöst.

Ein Computerprogrammprodukt mit Programmcode, der auf einem maschinenlesbaren Träger gespeichert ist, zur Durchführung des erfindungsgemäßen Verfahrens, wenn das Programm auf einem Computer oder Steuergerät ausgeführt wird ist Gegenstand des Anspruchs 10.

Bevorzugte Ausführungsformen und Weiterbildungen sowie Verfahrensergänzungen sind Gegenstand der abhängigen Ansprüche.

Das erfindungsgemäße Verfahren zur Bestimmung der Drehrichtung und/oder Drehgeschwindigkeit ω eines drehbaren Körpers auf Grundlage eines der Drehrichtung und/oder Drehgeschwindigkeit des drehbaren Körpers zuordenbaren, von einem Sensor abgegebenen Sinussignals (y) und Cosinussignals (x), weist dabei mindestens einen der folgenden Schritte auf: Aufnehmen eines der Drehrichtung und/oder Drehgeschwindigkeit zuordenbaren Sinussignals $(y_0)$ und Cosinussignals $(x_0)$ zu einem Zeitpunkt $t_0$; Bestimmen eines Phasenwertes $\varphi_0$ aus dem Sinussignal $(y_0)$ und Cosinussignal $(x_0)$; Aufnehmen der Drehrichtung und/oder Drehgeschwindigkeit zuordenbaren Sinussignalen $(y_i)$ und Cosinussignalen $(x_i)$ zu Zeitpunkten $t_i$; Bestimmen von Phasenwerten $\varphi_i$ aus den entsprechenden Sinussignalen $(y_i)$ und Cosinussignalen $(x_i)$; Bilden von Phasendifferenzen $\Delta\varphi_i$ aus den Phasenwerten $\varphi_i$ und dem Phasenwert $\varphi_0$; und/oder Bestimmen der Drehrichtung und/oder Drehgeschwindigkeit ω aus den Phasendifferenzen $\Delta\varphi_i$ auf Grundlage eines Nonius-Verfahrens.

Als Sensoren können AMR- oder GMR-Sensoren (AMR: Anisotropic Magneto Resistance, GMR: Giant Magneto Resistance) eingesetzt werden. Diese Sensoren erzeugen jeweils ein Sinussignal und ein Cosinussignal, aus denen in der weiteren Verarbeitung der zu messende Winkel errechnet werden kann. Weitere gattungsgemäße Sensoren sind beispielsweise Hallsensoren, sowie optische oder mikromechanische Geber.

Die der Drehrichtung und/oder Drehgeschwindigkeit des drehbaren Körpers zuordenbaren Sinussignale (y) und Cosinussignale (x) können von einem einzelnen Sensor oder von mehreren Sensoren stammen. Wird nur ein Sensor verwendet, liefert dieser jeweils ein der Drehrichtung und/oder Drehgeschwindigkeit des drehbaren Körpers zuordenbares Sinussignal und Cosinussignal. Werden mehrere Sensoren verwendet kann ein Sensor ein der Drehrichtung und/oder Drehgeschwindigkeit des drehbaren Körpers zuordenbares Sinussignal ausgeben und ein anderer Sensor ein entsprechendes Cosinussignal.

Die Sensorsignale können kontinuierliche Signale und/oder diskrete Signale sein.

Unter Anwendung geeigneter Verfahren, insbesondere des in der der Bosch R. 319810 beschriebenen Verfahren zur effizienten Offset-Kompensation bei Winkel- oder Phasensignalen, können die von einem Sensor abgegebenen Sinussignale (y) und Cosinussignale (x) von etwaigen Signal-Offsets befreit werden. Dieses Kompensationsverfahren wird im Folgenden kurz beschrieben:

Ein Winkel $\alpha$ von Winkelsensoren kann auf Grundlage eines dem Winkel zuordenbaren Sinussignals und eines dem Winkel zuordenbaren Cosinussignals, mit folgenden Schritten bestimmt werden: Aufnehmen eines ersten Wertepaars $S_0$, mit einem ersten Sinussignal ($y_0$) und einem ersten Cosinussignal ($x_0$); Aufnehmen eines zweiten Wertepaars S, mit einem zweiten Sinussignal (y) und einem zweiten Cosinussignal (x); Bilden eines dritten Wertepaars S' aus der Differenz des zweiten Wertepaars S und des ersten Wertepaars $S_0$; und/oder Bestimmen des Winkels $\alpha$ auf Grundlage des dritten Wertepaars S'.

Durch die Bestimmung des Winkels $\alpha$ auf Grundlage der Differenz zwischen dem ersten und zweiten Wertepaar, müssen die Offsets der aufgenommenen Cosinussignale bzw. Sinussignale weder bestimmt, noch mit berücksichtigt werden.

Aufgrund der oben beschriebenen Offset-Kompensation bzw. den gebildeten Phasendifferenzen $\Delta\varphi_i$ ist es möglich, ohne Kenntnis der Signal-Offsets, die Drehrichtung und die Drehgeschwindigkeit des drehbaren Körpers zu bestimmen.

In einer weiteren erfindungsgemäßen Ausgestaltung können die Phasenwerte $\varphi$ aus dem Sinussignal (y) und Cosinussignal (x) mit Hilfe eines CORDIC-Verfahrens (COordinate Rotation DIgital Computer) oder einer Reihenentwicklung ermittelt werden.

In einer weiteren erfindungsgemäßen Ausgestaltung sind die Zeitpunkte $t_i = t_0 + n \cdot \Delta t$ mit $n, \Delta t \in$ N. $n$ wird dabei als Periodenzahl und $\Delta t$ als Granularität bezeichnet.

Die Periodenzahl $n$ kann beispielsweise zwischen 5 - 50, vorzugsweise zwischen 10 - 35, weiter vorzugsweise zwischen 15 - 20 liegen. Die Periodenzahl $n$ kann an die Art des Sensors angepasst werden. Je höher die Periodenzahl, desto größer ist die Genauigkeit des Verfahrens.

Die Granularität $\Delta t$ kann beispielsweise im Bereich von 1 - 50 ms liegen, vorzugsweise zwischen 5 - 30 ms, weiter vorzugsweise zwischen 10 -15 ms. Die Granularität $\Delta t$ kann an die Art des Sensors angepasst werden. Die Wahl der Granularität ergibt den Eindeutigkeitsbereich der Drehfrequenzbestimmung. Bei einer Granularität $\Delta t$ = 10 ms ergibt sich ein Eindeutigkeitsbereich von $\pm 50$ Hz, was einem Geschwindigkeitsbereich von $\pm 300$ km/h entspricht. Insbesonde kann die Granularität bzw. die Abtastzeitpunkte so gewählt werden, dass sowohl Motion Detection als auch Drehrichtungserkennung möglich ist.

Gemäß einer weiteren Ausbildung der Erfindung entsprechen die Phasendifferenzen $\Delta\varphi_i$ folgenden Ausdruck: $\Delta\varphi_i = \omega \cdot t_i \mod 2\pi$, wobei $\omega$ der Drehrichtung und/oder Drehgeschwindigkeit und $t_i$ dem Messzeitpunkt entspricht.

Erfindungsgemäß kann die Drehrichtung und/oder Drehgeschwindigkeit $\omega$ aus den Phasendifferenzen $\Delta\varphi_i$ auf Grundlage eines Nonius-Verfahrens bestimmt werden. Das Nonius-Verfahren kann ein mehrdimensionales Nonius-Verfahren, ein klassisches Nonius-Verfahren, ein modifiziertes Nonius-Verfahren oder ein kaskadiertes, modifiziertes Nonius-Verfahren sein, wie beispielsweise in der DE 101 42 449 A1 der Anmelderin beschrieben.

Die Verwendung eines mehrdimensionalen Nonius-Verfahrens hat die folgenden Vorteile: Die Robustheit des Auswertesystems ist sehr hoch. Die schaltungstechnische Realisierung ist in Bezug auf Schaltungsaufwand, Rechenaufwand und Stromverbrauch gegenüber herkömmlichen Lösungen äußerst effizient zu gestalten. Es sind keinerlei Informationen über Signal-Offsets und Drehfrequenz erforderlich. Im Sensorsystem müssen keine Speichermöglichkeiten für Offsets vorgehalten werden. Die Offsets müssen nicht in einem separaten Schritt am Bandende oder im Betrieb ermittelt werden, wenn beispielsweise das oben beschriebene Verfahren zur effizienten Offset-Kompensation bei Winkeloder Phasensignalen zur Anwendung kommt.

Im Sinne der Erfindung kann der drehbare Körper ein Rad oder eine Welle sein.

Besonders geeignet ist das erfindungsgemäße Verfahren / die erfindungsgemäße Vorrichtung zur Auswertung von Beschleunigungssensoren (mikromechanisch oder piezoelektrisch) in Reifendruck-Überwachungssystemen (Tire Pressure Monitoring System - TPMS / Reifen-Druck-Kontroll-System - RDKS); Motion Detection und/oder Auto-Location.

Bei der erfindungsgemäßen Vorrichtung können in verschiedenen Ausgestaltungen weitere Schaltungsteile in einem Multiplex-Verfahren kombiniert werden. Auch ist es möglich, die Vorrichtung analog, digital oder aus einer Mischung von Analogtechnik und Digitaltechnik aufzubauen.

Zeichnungen

Die Erfindung wird nachstehend anhand der beigefügten Zeichnungen beispielhaft näher erläutert. Es zeigen:

    **Fig. 1** eine schematische Darstellung eines Rades mit zwei Beschleunigungssensoren;

    **Fig. 2** eine zweidimensionale Darstellung der Signale x und y;

    **Fig. 3** den Verlauf des Winkels $\varphi$ bei Drehbewegung;

    **Fig. 4** ein Flussdiagramm der Auswerteschaltung;

    **Fig. 5** den Verlauf der Phasendifferenz und aus den Messwerten gebildete Differenzwerte;

    **Fig. 6** einen Signalflussgraph zur Nonius-Berechnung; und

    **Fig. 7** ein Blockschaltbild einer Schaltungsanordnung.

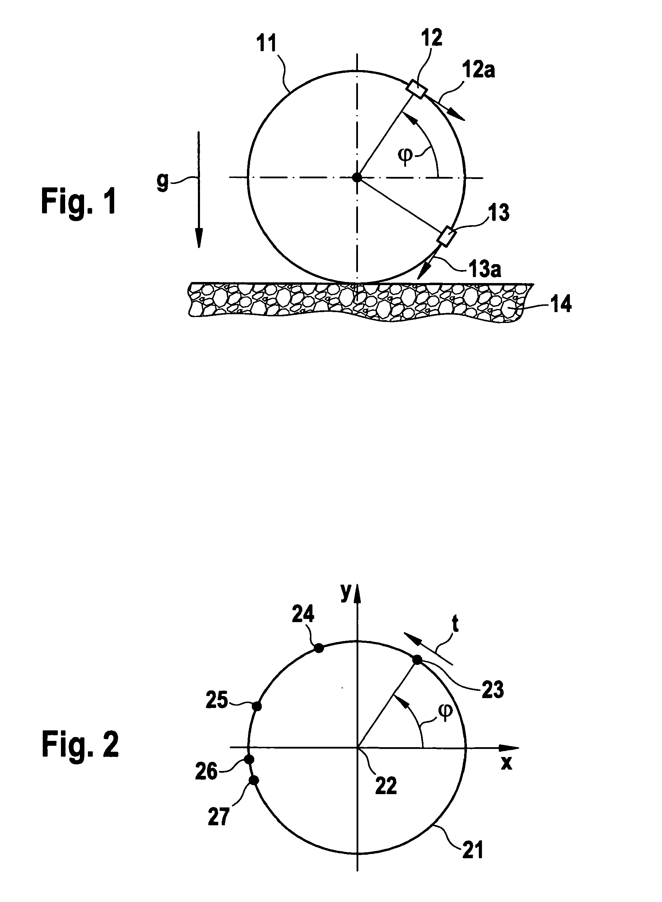

In **Fig. 1** ist schematisch ein Rad 11 dargestellt das auf einem Untergrund 14 abrollt. An dem Rad 11 sind zwei Beschleunigungssensoren 12, 13 an zwei unterschiedlichen Positionen angebracht. Auf das Rad 11 und die Beschleunigungssensoren 12, 13 wirkt die Erdbeschleunigung g. Zwischen den beiden Beschleunigungssensoren liegt ein Winkel von 90° bzw. $\pi/2$. Die Pfeile 12a, 13a geben die Detektionsrichtung des jeweiligen Beschleunigungssensors 12, 13 an. Dabei gibt der Beschleunigungssensor 12 ein Signal in der Form $x = \cos\varphi$ und der Beschleunigungssensor 13 ein Signal in der Form $y = \sin\varphi$ aus.

**Fig. 2** ist eine zweidimensionale Darstellung der Signale $x = \cos\varphi$ und $y = \sin\varphi$. Wie man erkennt liegen die Messpunkte 23, 24, 25, 26, 27 in Form M(x, y) auf einem Kreis 21 um den Ursprung 22, wobei der Winkel $\varphi$ zwischen dem Vektor vom Ursprung 22 zum Messpunkt M und der horizontalen Achse x gemessen wird.

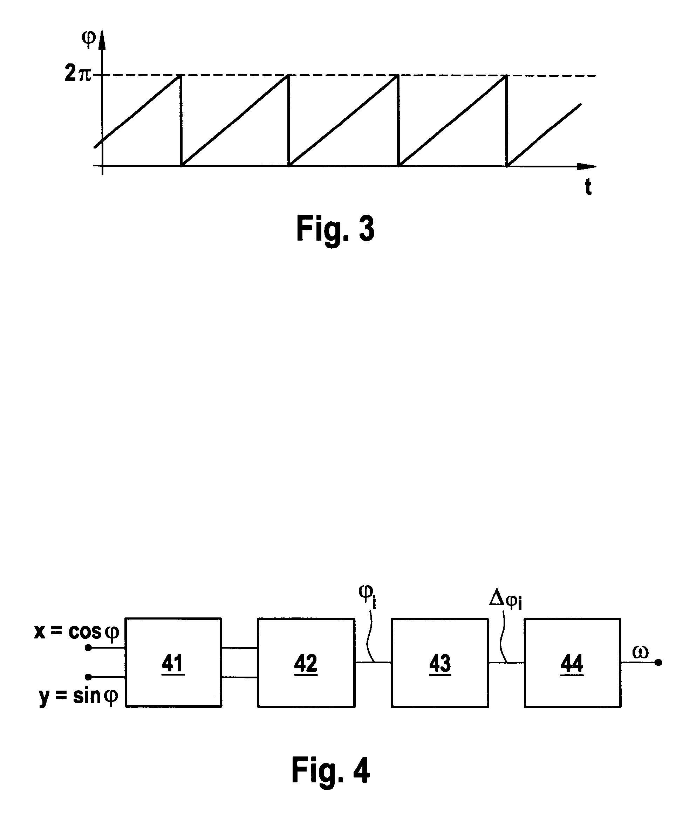

Der in **Fig. 3** dargestellte Verlauf entspricht dem Verlauf des Winkels $\varphi$ bei mehreren Umdrehungen des Rades 11. Dabei stellt eine Periode von 0 bis $2\pi$ eine volle Umdrehung dar.

**Fig. 4** stellt ein Flussdiagramm des erfindungsgemäßen Auswerteverfahrens dar. Wenn die Signale $x = \cos\varphi$ und $y = \sin\varphi$ der Beschleunigungssensor 12, 13 mit einem Offset behaftet sind, wird dieser im Block 41 kompensiert. Anschließend wird aus den offsetkompensierten Signalen im Block 42 mittels einer atan2 Berechnung ein Phasenwert $\varphi_i$ ermittelt. Im Block 43 wird anschließend aus dem Phasenwert $\varphi_i$ und dem Phasenwert $\varphi_0$ ein Phasendifferenzwert $\Delta\varphi_i$ berechnet. Im Block 44 wird aus dem Phasendifferenzwert $\Delta\varphi_i$ eine vorzeichenbehaftete Drehrichtung und/oder Drehgeschwindigkeit $\omega$ bestimmt. Diese Schritte werden für die Phasenwerte $\varphi_1$, $\varphi_2$, $\varphi_3$...$\varphi_i$ wiederholt. Erfindungsgemäß erfolgt dies auf Grundlage eines Nonius-Verfahrens.

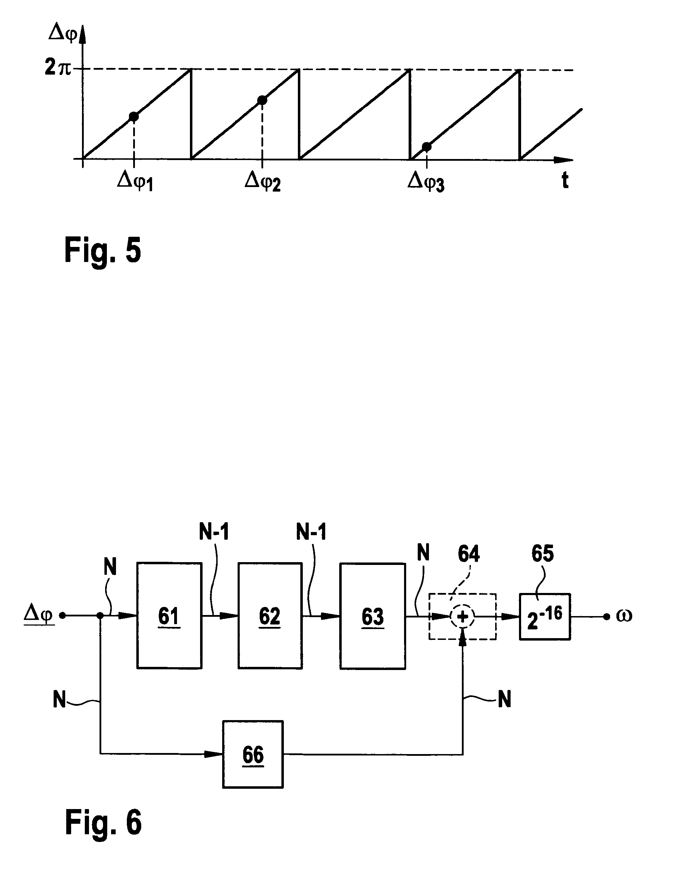

In **Fig. 5** ist der Verlauf des Phasendifferenzwerts $\Delta\varphi$ zusammen mit den Differenzwerten $\Delta\varphi_1$, $\Delta\varphi_2$, $\Delta\varphi_3$ dargestellt. Dabei stellt eine Periode von 0 bis $2\pi$ eine volle Umdrehung des Rades 11 dar.

**Fig. 6** zeigt einen Signalflussgraph zur Nonius-Berechnung. Im Block 61 werden $N$ Phasendifferenzwerte $\Delta\varphi$ in $N$-1 abgebildete Werte **S** durch lineare Transformation transformiert. Im Block 62 werden die $N$-1 abgebildeten Werte **S** in $N$-1 Werte **W** durch Quantisierung überführt. Anschließend werden die $N$-1 quantisierten Werte **W** im Block 63 durch lineare Transformation auf $N$ Werte **Z** abgebildet. Zu den $N$ transformierten Werten **Z** werden im Block 64 $N$ gewichtete Phasendifferenzwerte $\Delta\varphi$ hinzuaddiert. Im Block 65 wird anschließend die Summe aus den $N$ gewichteten Phasendifferenzwerten $\Delta\varphi$ und den $N$ Werten **Z** korrigiert, was schließlich zu Drehrichtung und/oder Drehgeschwindigkeit $\omega$ führt.

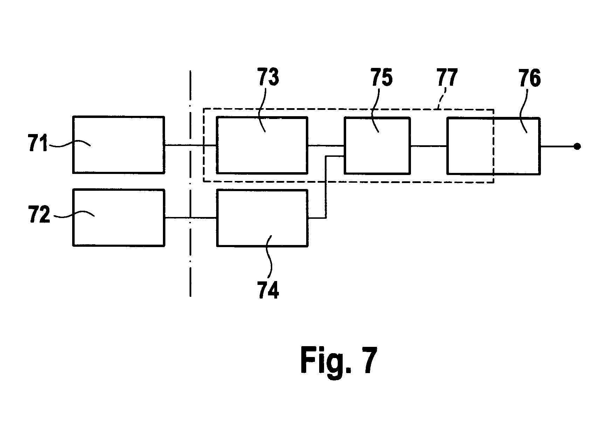

In **Fig. 7** ist ein Blockschaltbild der erfindungsgemäßen Schaltungsanordnung gezeigt, wie sie im Zusammenhang mit Motion Detection (MSI) zur Anwendung kommt. Die Sensoren 71, 72 nehmen die Beschleunigung des Rades 11 in der Form $x = \cos\varphi$ und $y = \sin\varphi$ auf. Diese Signale werden anschließend in den Abtasteinrichtungen 73, 74 abgetastet, d.h. aus den kontinuierlichen Werten werden diskrete Werte erzeugt. Diese diskreten Werte werden anschließend mittels eines Analog-Digital-Wandlers (A/D-Wandler) 75 digitalisiert. Die so digitalisierten Werte werden dann in einem digitalen Signalprozessor (DSP) 76 weiter verarbeitet, um so eine horizontale und/oder vertikale Bewegung, die Drehrichtung und/oder die Drehgeschwindigkeit des Rades 11 zu bestimmen. Die Abtasteinrichtung 73, der A/D-Wandler 75 und der DSP 76 können dabei zu einer Motion Detection (MSI) Einrichtung 77 zusammengefasst werden.

**Patentansprüche**

**1.** Verfahren zur Bestimmung der Drehrichtung und/oder Drehgeschwindigkeit $\omega$ eines drehbaren Körpers, insbesondere eines Rades oder einer Welle, auf Grundlage eines der Drehrichtung und/oder Drehgeschwindigkeit des drehbaren Körpers zuordenbaren, von einem Sensor abgegebenen Sinussignals (y) und Cosinussignals (x), wobei die Bestimmung durch die folgenden Schritte erfolgt:

- Aufnehmen eines der Drehrichtung und/oder Drehgeschwindigkeit zuordenbaren Sinussignals ($y_0$) und Cosinussignals ($x_0$) zu einem Zeitpunkt $t_0$;
- Bestimmen eines Phasenwertes $\varphi_0$ aus dem Sinussignal ($y_0$) und Cosinussignal ($x_0$);
- Aufnehmen der Drehrichtung und/oder Drehgeschwindigkeit zuordenbaren Sinussignalen ($y_i$) und Cosinussignalen ($x_i$) zu Zeitpunkten $t_i$;
- Bestimmen von Phasenwerten $\varphi_i$ aus den entsprechenden Sinussignalen ($y_i$) und Cosinussignalen ($x_i$); **gekennzeichnet durch** die folgenden Schritte,
- Bilden von Phasendifferenzen $\Delta\varphi_i$ aus den Phasenwerten $\varphi_i$ und dem Phasenwert $\varphi_0$; und
- Bestimmen der Drehrichtung und/oder Drehgeschwindigkeit $\omega$ aus den Phasendifferenzen $\Delta\varphi_i$ auf Grundlage eines Nonius-Verfahrens.

2. Verfahren nach Anspruch 1, **dadurch gekennzeichnet, dass** die Zeitpunkte $t_i = t_0 + n \cdot \Delta t$ mit $n, \Delta t \in N$.

3. Verfahren nach Anspruch 1 oder 2, **dadurch gekennzeichnet, dass** die Phasendifferenzen $\Delta\varphi_i = \omega \cdot t_i \bmod 2\pi$ entsprechen.

4. Verfahren nach mindestens einem der vorangegangenen Ansprüche, **dadurch gekennzeichnet, dass** die Phasenwerte $\varphi$ aus dem Sinussignal (y) und Cosinussignal (x) mit Hilfe eines CORDIC-Verfahrens ermittelt werden.

5. Verfahren nach mindestens einem der vorangegangenen Ansprüche, **dadurch gekennzeichnet, dass** durch das Nonius-Verfahren die folgenden Schritte ausführt werden:

   - lineare Transformation von *N* Phasendifferenzwerten $\Delta\varphi$ in *N-1* abgebildete Werte S;
   - Quantisierung der *N-1* abgebildeten Werte S in *N-1* Werte W;
   - Lineare Transformation der *N-1* quantisierten Werte W in *N* Werte Z;
   - Addition von *N* gewichteten Phasendifferenzwerten $\Delta\varphi$ zu den *N* transformierten Werten Z; und
   - Korrektur der Summe aus den *N* gewichteten Phasendifferenzwerten $\Delta\varphi$ und den *N* Werten Z.

6. Verfahren nach mindestens einem der vorangegangenen Ansprüche, **dadurch gekennzeichnet, dass** das Nonius-Verfahren ein mehrdimensionales Nonius-Verfahren, ein klassisches Nonius-Verfahren, ein modifiziertes Nonius-Verfahren oder ein kaskadiertes, modifiziertes Nonius-Verfahren ist.

7. Verfahren nach mindestens einem der vorangegangenen Ansprüche, **dadurch gekennzeichnet, dass** die Phasenwerte $\varphi$ durch die folgende Schritte bestimmt werden:

   - Aufnehmen eines ersten Wertepaars $S_0$, mit einem ersten Sinussignal ($y_0$) und einem ersten Cosinussignal ($x_0$);
   - Aufnehmen eines zweiten Wertepaars S, mit einem zweiten Sinussignal (y) und einem zweiten Cosinussignal (x);
   - Bilden eines dritten Wertepaars S' aus der Differenz des zweiten Wertepaars S und des ersten Wertepaars $S_0$; und
   - Bestimmen des Phasenwertes $\varphi$ auf Grundlage des dritten Wertepaars S'.

8. Vorrichtung derart eingerichtet, um eine Drehrichtung und/oder Drehgeschwindigkeit $\omega$ eines drehbaren Körpers, insbesondere eines Rades oder einer Welle, auf Grundlage eines der Drehrichtung und/oder Drehgeschwindigkeit zuordenbaren von einem Sensor abgegebenen Sinussignals (y) und Cosinussignals (x), entsprechend dem Verfahren nach einem der Ansprüche 1 - 7 zu bestimmen.

9. Computerprogramm, das alle Schritte eines Verfahrens nach einem der Ansprüche 1 - 7 ausführt, wenn es auf einem Rechengerät abläuft.

10. Computerprogrammprodukt mit Programmcode, der auf einem maschinenlesbaren Träger gespeichert ist, zur Durchführung des Verfahrens nach einem der Ansprüche 1 - 7, wenn das Programm auf einem Computer oder Steuergerät ausgeführt wird.

**Claims**

1. Method for determining the direction of rotation and/or rotational speed $\omega$ of a rotatable body, in particular a wheel or a shaft, on the basis of a sinusoidal signal (y) which can be assigned to the direction of rotation and/or rotational speed of the rotatable body and is output by a sensor, and of a cosine signal (x), the determination being performed by the following steps:

   - recording a sinusoidal signal ($y_0$) which can be assigned to the direction of rotation and/or rotational speed, and a cosine signal ($x_0$) at an instant $t_0$;
   - determining a phase value $\varphi_0$ from the sinusoidal signal ($y_0$) and cosine signal ($x_0$);
   - recording sinusoidal signals ($y_i$) and cosine signals ($x_i$) which can be assigned to the direction of rotation and/or rotational speed at instants $t_i$;
   - determining phase values $\varphi_i$ from the corresponding sinusoidal signals ($y_i$) and cosine sig-

nals $(x_i)$;
**characterized by** the following steps
- forming phase differences $\Delta\varphi_i$ from the phase values $\varphi_i$ and the phase value $\varphi_0$; and
- determining the direction of rotation and/or rotational speed $\omega$ from the phase differences $\Delta\varphi_i$ on the basis of a Nonius method.

2. Method according to Claim 1, **characterized in that** the instants $t_i = t_0 + n\cdot\Delta t$ with $n, \Delta t \in$ N.

3. Method according to Claim 1 or 2, **characterized in that** the phase differences correspond to $\Delta\varphi_i = \omega\cdot t_i$ mod $2\pi$.

4. Method according to at least one of the preceding claims, **characterized in that** the phase values $\varphi$ are determined from the sinusoidal signal (y) and cosine signal (x) with the aid of a CORDIC method.

5. Method according to at least one of the preceding claims, **characterized in that** the following steps are executed by the Nonius method:

   - linear transformation of $N$ phase difference values $\Delta\varphi$ in $N-1$ mapped values S;
   - quantization of the $N-1$ mapped values S into $N-1$ values W;
   - linear transformation of the $N-1$ quantized values W into $N$ values Z;
   - addition of $N$ weighted phase difference values $\Delta\varphi$ to the $N$ transformed values Z; and
   - correction of the sum of the $N$ weighted phase difference values $\Delta\varphi$ and the $N$ values Z.

6. Method according to at least one of the preceding claims, **characterized in that** the Nonius method is a multi-dimensional Nonius method, a classical Nonius method, a modified Nonius method or a cascaded, modified Nonius method.

7. Method according to at least one of the preceding claims, **characterized in that** the phase values $\varphi$ are determined by the following steps:

   - recording a first value pair $S_0$, with a first sinusoidal signal $(y_0)$ and a first cosine signal $(x_0)$ ;
   - recording a second value pair S, with a second sinusoidal signal (y) and a second cosine signal (x);
   - forming a third value pair S' from the difference between the second value pair S and the first value pair $S_0$; and
   - determining the phase value $\varphi$ on the basis of the third value pair S'.

8. Device set up in such a way as to determine a direction of rotation and/or rotational speed $\omega$ of a rotatable body, in particular a wheel or a shaft, on the basis of a sinusoidal signal (y) which can be assigned to the direction of rotation and/or rotational speed and is output by a sensor, and of a cosine signal (x), corresponding to the method according to one of Claims 1-7.

9. Computer program which executes all the steps of the method according to one of Claims 1-7, when it is run on a computer.

10. Computer program product having program code, which is stored on a machine-readable carrier, for carrying out the method according to one of Claims 1-7, when the program is executed on a computer or control device.

**Revendications**

1. Procédé pour déterminer le sens de rotation et/ou la vitesse de rotation $\omega$ d'un corps rotatif, notamment d'une roue ou d'un arbre, en se basant sur un signal sinusoïdal (y) et un signal cosinusoïdal (x) associables au sens de rotation et/ou à la vitesse de rotation du corps rotatif délivrés par un capteur, la détermination s'effectuant par le biais des étapes suivantes :

   - enregistrement d'un signal sinusoïdal $(y_0)$ et d'un signal cosinusoïdal $(x_0)$ associables au sens de rotation et/ou à la vitesse de rotation à un instant $t_0$ ;
   - détermination d'une valeur de phase $\varphi_0$ à partir du signal sinusoïdal $(y_0)$ et du signal cosinusoïdal $(x_0)$ ;
   - enregistrement de signaux sinusoïdaux $(y_i)$ et de signaux cosinusoïdaux $(x_i)$ associables au sens de rotation et/ou à la vitesse de rotation aux instants $t_i$ ;
   - détermination de valeurs de phase $\varphi_i$ à partir des signaux sinusoïdaux $(y_i)$ et des signaux cosinusoïdaux $(x_i)$ correspondants;
   **caractérisé par** les étapes suivantes
   - calcul de différences de phase $\Delta\varphi_i$ à partir des valeurs de phase $\varphi_i$ et de la valeur de phase $\varphi_0$ et
   - détermination du sens de rotation et/ou de la vitesse de rotation $\omega$ à partir des différences de phase $\Delta\varphi_i$ en se basant sur un procédé à vernier.

2. Procédé selon la revendication 1, **caractérisé en ce que** les instants $t_i = t_0 + n . \Delta t$ avec $n, \Delta t \in$ N.

3. Procédé selon la revendication 1 ou 2, **caractérisé en ce que** les différences de phase $\Delta\varphi_i = \omega . t_i$ correspondent à mod $2\pi$.

4. Procédé selon au moins l'une des revendications précédentes, **caractérisé en ce que** les valeurs de

phase φ du signal sinusoïdal (y) et du signal cosinusoïdal (x) sont déterminées à l'aide d'un procédé CORDIC.

5. Procédé selon au moins l'une des revendications précédentes, **caractérisé en ce que** les étapes suivantes sont exécutées par le procédé à vernier :

   - transformation linéaire de N valeurs de différence de phase Δφ en N-1 valeurs S illustrées ;
   - quantification des N-1 valeurs S illustrées en N-1 valeurs W ;
   - transformation linéaire des N-1 valeurs W quantifiées en N valeurs Z ;
   - addition de N valeurs de différence de phase Δφ pondérées aux N valeurs Z transformées et
   - correction de la somme des N valeurs de différence de phase Δφ pondérées et des N valeurs Z.

6. Procédé selon au moins l'une des revendications précédentes, **caractérisé en ce que** le procédé à vernier est un procédé à vernier multidimensionnel, un procédé à vernier classique, un procédé à vernier modifié ou un procédé à vernier modifié en cascade.

7. Procédé selon au moins l'une des revendications précédentes, **caractérisé en ce que** les valeurs de phase φ sont déterminées par les étapes suivantes :

   - enregistrement d'une première paire de valeurs $S_0$ avec un premier signal sinusoïdal ($y_0$) et un premier signal cosinusoïdal ($x_0$) ;
   - enregistrement d'une deuxième paire de valeurs S avec un deuxième signal sinusoïdal (y) et un deuxième signal cosinusoïdal (x) ;
   - calcul d'une troisième paire de valeurs S' à partir de la différence entre la deuxième paire de valeurs S et la première paire de valeurs $S_0$ et
   - détermination de la valeur de phase φ sur la base de la troisième paire de valeurs S'.

8. Dispositif conçu pour déterminer un sens de rotation et/ou une vitesse de rotation ω d'un corps rotatif, notamment d'une roue ou d'un arbre, en se basant sur un signal sinusoïdal (y) et un signal cosinusoïdal (x) associables au sens de rotation et/ou à la vitesse de rotation délivrés par un capteur, conformément au procédé selon l'une des revendications 1 à 7.

9. Programme informatique qui exécute toutes les étapes d'un procédé selon l'une des revendications 1 à 7 lorsqu'il est exécuté sur un calculateur.

10. Produit de programme informatique comprenant un code de programme qui est enregistré sur un support lisible par machine pour mettre en oeuvre le procédé selon l'une des revendications 1 à 7 lorsque le programme est exécuté sur un ordinateur ou un contrôleur.

**Fig. 1**

**Fig. 2**

**Fig. 3**

**Fig. 4**

**Fig. 5**

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003145663 A
- EP 1172656 A
- US 2004015307 A
- DE 10142449 A1